# EUROPEAN PATENT APPLICATION

(11) **EP 1 624 622 A1**
(43) Date of publication of application: **08.02.2006**
(21) Application number: 04720185.0
(22) Date of filing: 12.03.2004
(51) Int. Cl.: H04L 12/46, H04L 12/66, G06F 15/00

(54) **INTER-DEVICE AUTHENTICATION SYSTEM, INTER-DEVICE AUTHENTICATION METHOD, COMMUNICATION DEVICE, AND COMPUTER PROGRAM**

(30) Priority: 12.05.2003 JP 2003132904
(71) Applicant: SONY CORPORATION, Tokyo 141-0001 (JP)
(72) Inventor: NAKANO, Takehiko, c/o Sony Corporation, Shinagawa, Tokyo 1410001 (JP); TAKABAYASHI, Kazuhiko, c/o Sony Corporation, Shinagawa, Tokyo 1410001 (JP); HONDA, Yasuaki, c/o Sony Corporation, Shinagawa, Tokyo 1410001 (JP); IGARASHI, Tatsuya, c/o Sony Corporation, Shinagawa, Tokyo 1410001 (JP)
(74) Representative: DeVile, Jonathan Mark
(86) International application number: PCT/JP2004/003327
(87) International publication number: WO 2004/100456

(57) **Abstract**

Providing a function of isolating a home network from an external network for a router or a gateway, which are interposed between the home network and the external network, so as to isolate or disconnect the home network from the external network when, for example, the home server registers a client as a member or provides the contents or issues a license thereof, thereby ensuring a client making a request is present in the local environment. It is possible to manage the contents legitimately acquired on the home server so as to be used by a client terminal within the scope of private use allowed by the copyright law.

## Description

### Technical Field

The present invention relates to a device-to-device authentication system, a device-to-device authentication method, a communication apparatus and a computer program, for managing the use of the contents such as music data, image data, digital data such as electronic publication, a motion picture or the like, which are distributed by a network or the like, in particular, to a device-to-device authentication system, a device-to-device authentication method, a communication apparatus and a computer program for managing the use of the contents within the scope of private use allowed by the copyright law.

More specifically, the present invention relates to a device-to-device authentication system, a device-to-device authentication method, a communication apparatus and a computer program for managing the use of the contents within the scope of private use allowed by the copyright law on a home network connected to an external network via a router, in particular, to a device-to-device authentication method, a communication apparatus and a computer program for managing so that each client terminal on the home network uses the contents legitimately acquired on a home server within the scope of private use allowed by the copyright law.

### Background Art

Owing to the recent diffusion of the Internet, various digital contents including a computer file are actively distributed on a network. Moreover, with the spread of a broadband communication network (xDSL (x Digital Subscriber Line), CATV (Cable TV), a wireless network or the like), a mechanism capable of transmitting the distribution of digital data such as music data, image data or electronic publication and even rich contents such as a motion picture without giving any stresses to a user is now being arranged.

On the other hand, the distributed contents are digital data, and therefore, an unauthorized operation such as copy or falsification can be relatively easy to perform. Moreover, a fraud such as the copy or the falsification of the contents is currently frequently committed, which is a main cause of hampering the interest of a digital-content vendor. As a result, a vicious cycle that the price of the contents must be increased to result in the hindrance of diffusion is generated.

For example, recently, the technology of a computer, a network or the like is steadily spreading to general households. An information device such as a personal computer for home use or a PDA (Personal Digital Assistants), and, in addition, various information home appliances such as a television set and a video playback apparatus are interconnected via a home network. In many cases, such a home network is interconnected to an external broadband network including the Internet via a router. After the contents legitimately acquired from a server on the Internet are stored in a server on the home network (hereinafter, referred to as a "home server"), the contents are distributed via the home network to another in-home terminal (client).

Under the copyright law, the contents as copyright work are protected against unauthorized use such as unauthorized copy or falsification. On the other hand, an authorized user is allowed to copy the contents for private use, that is, for personal use, family use or other similar uses within a limited circle (see Copyright Law of Japan, Article 30).

If the scope of private use is applied to the above-described home network, the client terminal connected to the home network is supposed tobe within the scope of personal use or family use. Therefore, it is considered that it is appropriate for the client terminal on the home network to make free use of the legitimately acquired contents in the home server (it is apparent that the number of terminals which can enjoy the contents is required to be limited to a certain number).

With a current technique, however, it is difficult to identify whether a client terminal logging into the home network is within the scope of private use or not.

For example, since the home network is interconnected to an external network via a router based on an IP protocol, the home server does not know where a client making access actually is. If the home server provides the contents to external (remote) access, the use of the contents is substantially unrestrained. Therefore, the copyright for the contents is almost unprotected. As a result, a content creator may lose the motivation of the creation.

Furthermore, if the home server allows the client terminal in the home network to use the contents in the same manner, the same client terminal logs into a plurality of home networks at time intervals. As a result, it can use the contents almost unrestrictedly.

On the other hand, if strict restrictions are imposed on the client terminal, a user cannot ensure the private use fundamentally allowed by the copyright law. As a result, the user cannot satisfactory enjoy the contents. Accordingly since the use of a home server or a content-distribution service is not well promoted, the development of content business itself may be impeded.

For example, in consideration of the fact that a user who legitimately purchases copyright work is allowed for free use of it, a method for more easily obtaining consent from an owner of the rights to the contents for the copy and the use of information on a network by the user has been proposed (see, for example, Japanese Patent Application Publication No. 2002-73861). However, this method classifies users depending on the level of relation with the owner of the rights to the use of information and distributes the information by a different distribution method for each level of the relation. This method does not identify the extent of the scope of private use on the network.

Furthermore, as a protocol constituting the home network, for example, an UPnP (registered trademark) has recently been known. The UPnP allows easy network construction without any complicated operations and allows a content-providing service between network-connected devices without any difficult operations and setting. Moreover, the UPnP is advantageous in that it is not dependent on an operating system (OS) and the addition of a device is easy.

In the UPnP, network-connected devices exchange a definition file described in an XML (extended Markup Language) format for mutual authentication. The outline of processing of the UPnP is as follows.
(1) Addressing process: its own device ID such as an IP address is acquired.
(2) Discovery process: each device on a network is searched so as to acquire information such as device type or a function contained in a response received from each device.
(3) Service request process: a request is made for a service to each device based on information acquired by the discovery process.

By such a processing procedure, a service can be provided and received using network-connected devices. A device to be connected to the network acquires a device ID by the addressing process and acquires information for other devices on the network by the discovery process, thereby enabling a service request.

The contents stored in the home server can be accessed from other devices on the home network. For example, the contents can be acquired by a device implementing the UPnP connection. If the contents are video data or audio data, a TV or a player is connected as a network-connected device so that a movie or music can be enjoyed.

However, in the device within the home network, for example, in the home server, the contents requiring copyright management such as private contents or pay contents are stored. Therefore, it is necessary to consider the countermeasure against unauthorized access.

It is natural that access from a device of a user having the rights to the use (a license) of the contents is allowed. However, in a home network environment interconnected to the external network via a home router, even a user without a license can get into the home network.

In order to exclude unauthorized access, for example, the home server is made to have a list of clients whose access is allowed so that collation with the list is executed each time access to the home server is requested from a client. In this way, unauthorized access can be excluded.

For example, MAC address filtering is known, which uses a MAC (Media Access Control) address corresponding to a physical address unique to each communication apparatus to set it as an access-allowable device list. More specifically, a MAC address of each device whose access is allowed is registered on a router or a gateway for isolating the internal network such as the home network and the external network from each other. A MAC address assigned to a received packet and the registered MAC address are collated with each other. Access from a device with an unregistered MAC address is refused (see, for example, Japanese Patent Application Publication No. 10-271154).

In order to construct the access-allowable device list, however, it is necessary to check the MAC addresses of all the devices connected to the internal network. Moreover, efforts to input all the acquired MAC addresses so as to create a list are required. Furthermore, in the home network, a connected device is relatively frequently changed. Therefore, the access-allowable device list has to be modified for each such change.

### Disclosure of the Invention

An object of the present invention is to provide preferable device-to-device authentication system, device-to-device authentication method, communication apparatus and computer program, which are capable of suitably managing the use of the contents on a home network connected to an external network via a router.

Another object of the present invention is to provide preferable device-to-device authentication system, device-to-device authentication method, communication apparatus and computer program, which are capable of suitably managing so that each client terminal on a home network uses the contents legitimately acquired on a home server within the scope of private use allowed by the copyright law.

The present invention is devised in view of the above issues. A first aspect thereof is a device-to-device authentication system for authenticating a device on a home network connected to an external network via a router, characterized by including: path disconnection means for connecting and disconnecting a path between the external network and the home network; and local environment management means for making the path disconnection means operate to isolate the home network from the external network at timing ensuring communication between devices on the home network, thereby achieving local communication in the home network.

However, a "system" herein means a logical assembly of apluralityof apparatuses (or functional modules for realizing a specific function), and each apparatus or functional module may be or may not be present in a single box body.

Herein, one of the devices is a home server for legitimately acquiring the contents from the external network via the router, whereas the other device is a client for making a request for the contents to the home server for use. After the confirmation of the presence of both the devices on the same home network, the home server provides the contents and/or issues a license for the contents to the client.

Under the copyright law, the contents as copyright work are protected against unauthorized use such as unauthorized copy or falsification. On the other hand, an authorized user is allowed to copy the contents for private use, that is, for personal use, family use or other similar uses in a limited circle.

Two or more home servers can be installed on the home network. In such a case, since client terminals on the same home network is under a local environment, each home server registers them as members to form a group in an independent manner so as to distribute the contents and issue a license for the use of the contents. Furthermore, the client terminal can be registered as a member simultaneously on two or more home servers on the same home network to belong to a plurality of groups so as to acquire a license of the contents from each of the home servers.

In this case, since the client terminal is also under a local environment for each of the home servers and therefore is supposed to correspond to the scope of personal use or family use, it is appropriate for it to make free use of the contents of each of the home serves in the local environment.

On the other hand, even if the client terminal can be registered on a plurality of home server as a member at the same time, it should not be allowed to belong to a plurality of groups of home servers over a plurality of home networks at time intervals. This is because the connection to another home network is corresponding to the shift of the client terminal to a remote environment for the first connected home network or the connection to one home network is equivalent to the presence of the client terminal in a remote environment for the other home networks.

Therefore, in the device-to-device authentication system according to the present invention, a client can use the contents acquired from a plurality of home servers on the same home network. However, upon connection to a home server on an other home network, the client is not able to use the contents acquired from the home servers on the home networks other than currently connected.

A current network protocol does not provide any mechanisms for identifying whether devices that are interconnected through a network canprivatelyuse the contents within the scope of authenticity, that is, personal or family use. Therefore, in the present invention, the path between the home network and the external network is temporarily disconnected so as to ensure that devices capable of communicating each other in this period are present on the same home network.

According to the present invention, a control mechanism for disconnecting or connecting the path between the home network and the external network is provided for, for example, a home router. Then, at the timing at which the communication under a local environment must be ensured such as at the registration of a client terminal by the home server as a member, the provision of the contents and the issuance of a license thereof, the path between the home network and the external network is disconnected. As a result, the home server performs local communication, so that only the client terminal present under the local environment can use the contents stored on the home server.

After the completion of the local communication on the home network, or after the elapse of a predetermined time from the start of local communication, it is suitable to reestablish the path between the home network and the external network.

A second aspect of the present invention is a computer program described in a computer-readable format so as to execute a process for authenticating a device on a home network connected to an external network via router on a computer system, characterized by including the steps of: acquiring timing for ensuring communication between devices on the home network; and temporarily disconnecting a path between the external network and the home network at the timing so as to isolate the home network from the external network.

The computer program according to the second aspect of the present invention defines a computer program described in a computer-readable format so as to realize a predetermined process on a computer system. In other words, the computer program according to the second aspect of the present invention is installed on a computer system, so that a cooperative function is demonstrated on the computer system. As a result, the same effects as those of the device-to-device authentication system according to the first aspect of the present invention can be obtained.

The other obj ects, features and advantages of the present invention will be apparent from the detailed description based on the following embodiments of the present invention and the accompanying drawings.

### Brief Description of Drawings

Fig. 1 is a diagram schematically showing a basic structure of a home network;
Fig. 2 is a diagram showing an exemplary structure of a home network on which two home servers are present;
Fig. 3 is a diagram showing a state where a client terminal is connected to a plurality of home networks;
Fig. 4 is a diagram schematically showing a structure of a home network according to one embodiment of the present invention;
Fig. 5 is a diagram schematically showing a structure of a home network according to another embodiment of the present invention;
Fig. 6 is a diagram schematically showing a hardware structure of a host apparatus connected to the home network as a server, a client or the like;
Fig. 7 is a diagram showing an internal structure of a home router 40 for connecting a home network and an external network to each other;
Fig. 8 is a diagram showing another embodiment example of an internal structure of the home router 40 for connecting the home network and the external network to each other; and
Fig. 9 is an operation sequence diagram showing a processing procedure for disconnecting a path between the home network and the external network by the home router 40.

### Best Mode for Carrying Out the Invention

Hereinafter, embodiments of the present invention will be described in detail with reference to the drawings.

Under the copyright law, the contents as copyright work are protected against unauthorized use such as unauthorized copy or falsification. On the other hand, an authorized user is allowed to copy the contents for private use, that is, for personal use, family use or other similar uses in a limited circle (see Copyright Law of Japan, Article 30).

Assuming that a client terminal in a home network (hereinafter, also referred to as a "local environment") falls within the scope of private use, the inventors of the present invention propose a system in which only a client under the local environment can uses the contents stored on a home server.

Herein, the definition of the local environment will be described.

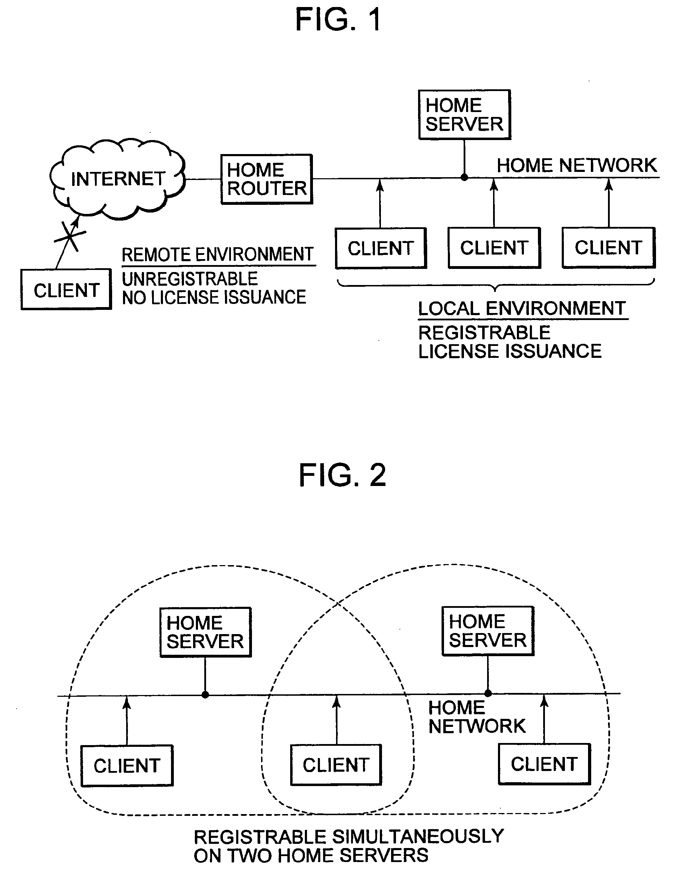

Fig. 1 schematically shows a basic structure of a home network. As shown in the drawing, a home network installed in home is connected to an external network such as the Internet via a home router.

On the home network, a home server and at least one client terminal are present. The home server legitimately acquires and stores the contents from a content server on the external network via the home router to distribute the contents in home. It is apparent that the home server can acquire the contents by means other than the network, such as a package media or broadcast reception. Each client terminal makes a request for desired contents to the home server so as to acquire them for use.

The client terminals connected to the home network are present under the local environment, and it is supposed that they are within the scope of personal or familyuse. Therefore, it is considered that it is appropriate for the client terminals on the home network to make free use of the contents legitimately acquired on the home server.

Accordingly, the home server registers the client terminals under the local environment as members and issues a license for the contents distribution and the use of the contents. It is apparent that the number of terminals capable of enjoying the contents is required to be limited to a certain number.

Under the local environment, the client terminal acquires the contents from the home server, uses the contents such as for copy or streaming and can also take the contents out of the local environment (into a remote environment) for use.

On the other hand, a client terminal that is not present on the home network, that is, in a remote environment, is not considered to be within the scope of personal or family use. If the client terminal in the remote environment is allowed to use the contents, the use of the contents is substantially unrestrained. As a result, the copyright for the contents is almost unprotected. Therefore, the home server neither registers the client in the remote environment as a member nor issues a license of the contents.

In the example shown in Fig. 1, only one home server is present on the home network. However, it is apparent that two or more home servers may be installed on the same home server so that each of the home servers independently provides a distribution service of the contents in the home network.

Fig. 2 shows an exemplary structure of the home network on which two home servers are present.

In this case, since client terminals on the same home network are under a local environment, each of the home servers registers them as members to form a group so as to distribute the contents and to issue a license for the use of the contents. The client terminal acquires the contents from the home server, uses the contents such as for copy or streaming and can also take the contents out of the local environment (into a remote environment) for use.

Furthermore, the client terminal can be registered simultaneously on two or more home servers on the same home network as members to belong to a plurality of groups and can acquire a license of the contents from each of the home servers. In this case, the client terminal is also present under the local environment for the respective home servers and therefore it is supposed that it is within the scope of personal or family use. Therefore, it is considered that it is appropriate for the client to make free use of the contents of each of the home servers in the local environment.

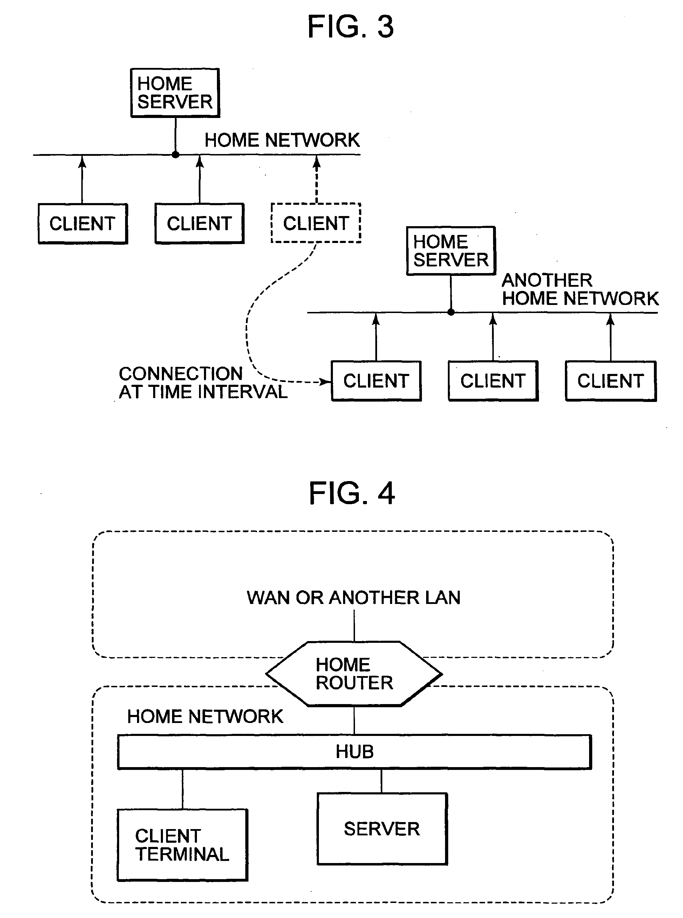

On the other hand, even if the client terminal can be registered on a plurality of home server as a member at the same time, it should not be allowed to belong to a plurality of groups of home servers over a plurality of home networks (see Fig. 3). This is because the connection to another home network is corresponding to a shift of the client terminal to a remote environment for the first connected home network or the connection to one home network is equivalent to the presence of the client terminal in a remote environment for the other home networks. The local environment is within the personal or family scope, whereas the remote environment departs from the personal or family scope.

It is technically possible for the client terminal to be connected to a plurality of home networks at time intervals. However, if the use of the contents is successively allowed with the connection, the use of the contents is substantially unrestrained. As a result, the copyright for the contents is almost unprotected.

Summarizing the above, in order to realize a local environment that is supposed to be within the scope of personal or family use on the home network, the followings are derived as necessary conditions.
(1) The home server does not allow member registration from outside of the home network; and
(2) When two or more home servers are present in the same home network, member registration and group management are performed for each of the home servers. Each of the clients on the home network canbe registered on two or more home servers. However, the home servers simultaneously accepting the registration must be present in the same home network.

In order to realize such a local environment, a mechanism for identifying whether the home server and the client terminal are present on the same home network or not is required between them.

A current network protocol does not provide any mechanism for identifying a network, such as a home network, by segment. Therefore, the inventors of the present invention propose a method of providing a function of isolating the home network from the external network for a router or a gateway, which are interposed between the home network and the external network, so as to isolate or disconnect the home network from the external network when, for example, the home server registers a client as a member or provides the contents or issues a license thereof, thereby ensuring a client making a request is present in the same local environment as that of the home server.

Fig. 4 schematically shows a structure of a home network according to an embodiment of the present invention.

A home network installed in home is connected to a WAN such as the Internet or another LAN via a home router. The home router is set as a default Gateway of the home network.

The home network is constituted by, for example, connecting a LAN cable of a host apparatus such as a home server or a client terminal to a hub (concentrator).

The host apparatuses on the home network, such as the home server, the client terminal and the home router, and a host apparatus on the external network have MAC addresses, each being unique to a device. The host apparatus transmits and receives a packet including header information containing a destination MAC address and a source MAC address, for example, an Ethernet (registered trademark) frame via the network.

The host apparatuses on the home network, such as the home server and the client terminal, are constituted as, for example, UPnP-compatible devices. In this case, the addition and the deletion of a connected device to/from the network are easy. A device to be connected to the network can enjoy service on the home network such as the use of the contents in accordance with the following procedure.
(1) Addressing process: its own device ID such as an IP address is acquired.
(2) Discovery process: each device on a network is searched so as to acquire information such as device type or a function contained in a response received from each device.
(3) Service request process: A request for a service is made to each device based on information acquired by the discovery process.

On the home network, a local environment that is supposed to be within the scope of personal or family use is formed. Therefore, the home server legitimately acquires and stores the contents from a content server on the external network via the home router to distribute the contents in home. Each of the client terminals is allowed tomake a request for desired contents to the home server so as to acquire them for use.

Under the local environment, the client terminal acquires the contents from the home server to use the contents for copy or streaming. Furthermore, it can take the contents out of the local environment (into the remote environment) for use.

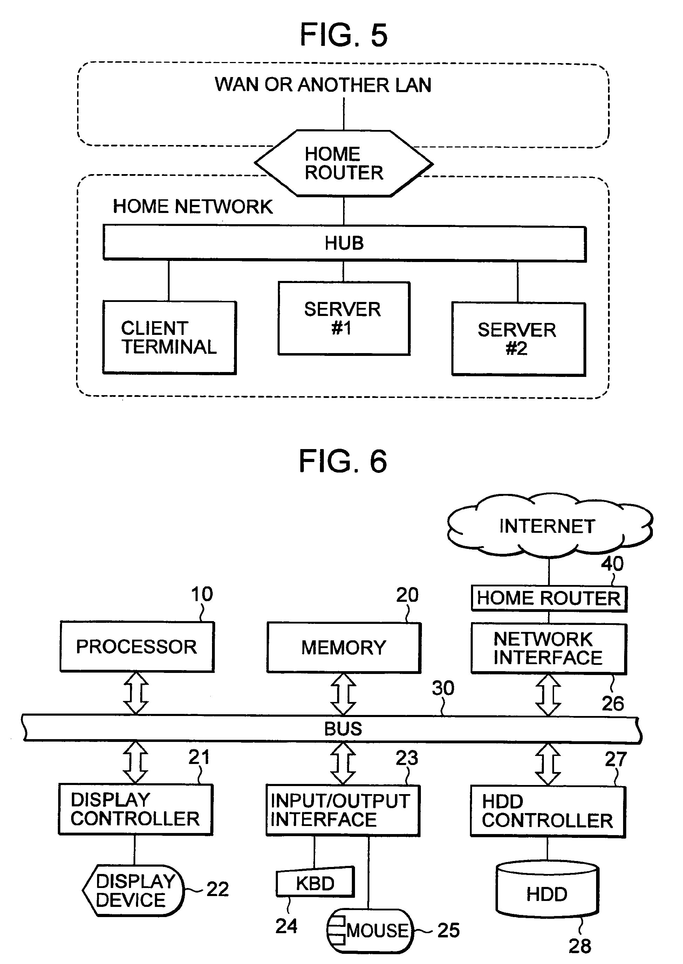

Fig. 5 schematically shows a structure of a home network according to another embodiment of the present invention.

The home network is connected to a WAN such as the Internet or another LAN via a home router. In this case, the home router is also set as a default Gateway of the home network.

This differs from Fig. 4 in that two home servers are present on the home network. The respective home servers may be simultaneously present on the home network or may be connected at a time interval.

In this case, since the client terminals on the same home network are under the local environment, each of the home servers registers them as members to form a group so as to distribute the contents and to issue a license for the use of the contents. The client terminal acquires the contents from the home server, uses the contents such as for copy or streaming and can also take the contents out of the local environment (into a remote environment) for use. Furthermore, the client terminal can be registered simultaneously on two or more home servers on the same home network as members to belong to a plurality of groups so as to acquire a license of the contents from each of the home servers.

Fig. 6 schematically shows a hardware structure of a host apparatus connected to the home network as a server, a client or the like.

The system is constructed mainly of a processor 10. The processor executes various processes based on a program stored in a memory. The processor controls various peripheral devices connected through a bus 30. The peripheral devices connected to the bus 30 are as follows.

A memory 20 is constituted of a semiconductor memory, for example, a DRAM (Dynamic RAM) or the like and is used to load a program code executed in the processor 10 or to temporarily store operation data of an execution program.

A display controller 21 generates a display image in accordance with a draw command sent from the processor 10 and transmits it to a display apparatus 22. The display apparatus 22 connected to the display controller displays and outputs the image on a screen in accordance with display image information transmitted from the display controller 21.

An input/output interface 23, to which a keyboard 24 and a mouse 25 are connected, transfers an input signal from the keyboard 24 or the mouse 25 to the processor 10 via the bus 30.

A network interface 26 is connected to the home network (hub) and is further connected to the external network such as the Internet via the home router 40, and controls data communication through the Internet. Specifically, it transfers data transmitted from the processor 10 to another apparatus on the Internet and receives data transmitted through the Internet so as to pass it to the processor 10.

A hard disk drive (HDD) controller 27, to which a high-capacity external storage apparatus 28 such as an HDD is connected, controls the input and output of data to the HDD 28 to which the HDD controller 27 is connected. The HDD 28 stores a program of an operating system (OS), an application program, a driver program and the like to be executed by the processor. The application program is, for example, a server application for authenticating each client terminal on the home network as the home server or for providing the contents or issuing a license, a client application for use of the contents such as for reproduction of the contents provided by the server or the like, and the like.

In order to constitute the host apparatus, a large number of electric circuits or the like are required in addition to those illustrated in Fig. 6. However, since they are known to those skilled in the art and do not constitute the gist of the present invention, they are omitted in this specification. Moreover, it should be understood that each connection between hardware blocks in the drawing is only partially illustrated in order to avoid the complication of the drawing.

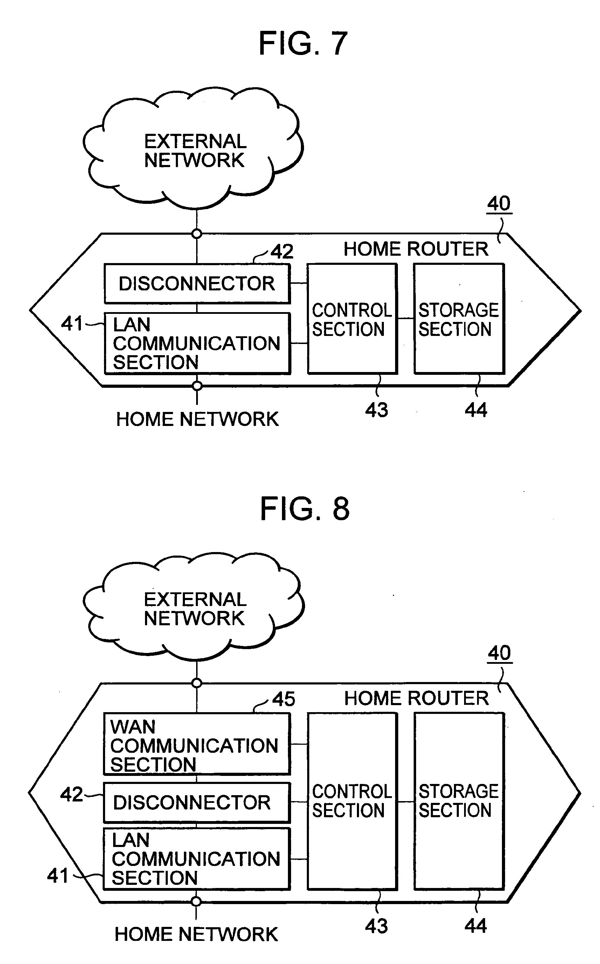

Fig. 7 shows an internal structure of the home router 40 for connecting the home network and the external network to each other. A LAN communication section 41 corresponds to a transmission/reception function for performing communication with the home server. A disconnector 42 is a functional module for isolating or disconnecting the home network from the external network such as a WAN. A control section 43 controls the communication through the LAN communication section 41 so as to implement the authentication with the home server, to exchange a control message, to control the disconnector 42 and the like. A storage section 44 stores an operation program of the control section 43 and data necessary for it, key information for authentication and the like.

Fig. 8 shows another embodiment of the home router 40. In a structure shown in the drawing, the WAN communication section 45 allows the home router 40 to communicate with the external network even after the external network and the home network are separated from each other by the disconnector 42. In this case, for example, by monitoring if there is another apparatus communicating with the external network, directing the path disconnection to another apparatus, for example, another modem from the external network, confirming that the communication is disconnected in accordance with the direction through actual access to a predetermined server on the external network by using the WAN communication section 45, the realization of the disconnection is further ensured.

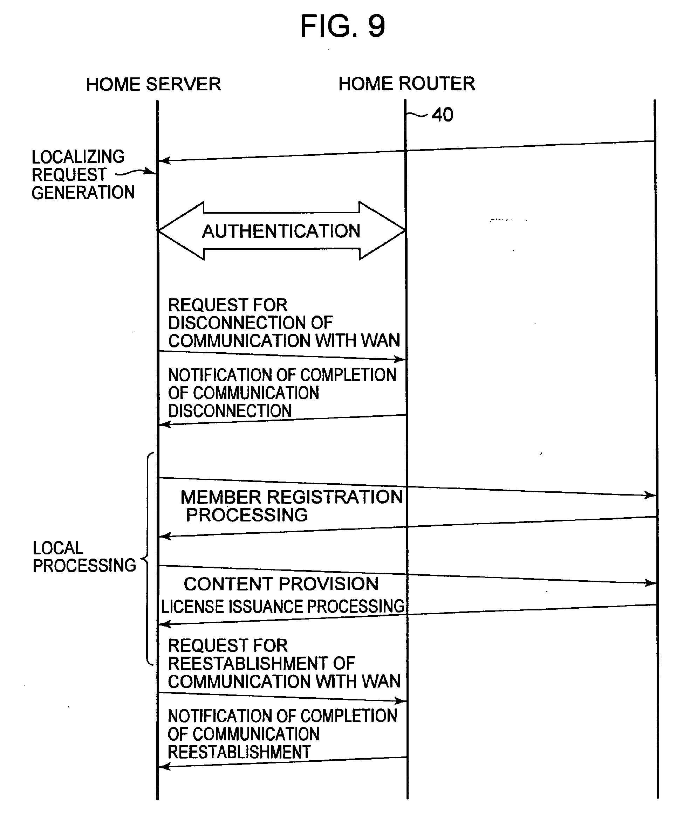

Fig. 9 shows a processing procedure for disconnecting the path between the home network and the external network by the home router 40.

The home server must ensure that the client terminal is present in the local environment, that is, on the same home network at the step of registering the client terminal as a member of a group in the home network or the step of providing the contents only available for private use or a license thereof for the client terminal.

At the step at which local communication is required as described above, the home server requests the home router 40 to disconnect the path to the external network.

Prior to the path disconnection, the authentication may be executed so as to confirm that the home router 40 is a valid device working as required. However, as a general UPnP-compatible router, some routers can control the disconnection but do not have the authenticating function. Therefore, the authentication is not indispensable.

For the authentication, for example, general challenge-response authentication or the like is used. In this case, a random number is transmitted from the home server to the home router 40. In response to it, the home router 40 hashes a secret key shared with the home server in association with the random number so as to return it to the home server. The home server obtains an expected value which should be returned from the home router 40 in the same method. If the concordance is confirmed, it is determined that the authentication is successful. Besides such a shared secret key-based method, there is a public key-based method of encrypting it by a secret key of the home router 40 to return it.

After the successful authentication, the home server directs the home router 40 to disconnect the path. In this manner, while the home network is being isolated or disconnected from the external network, the home server perform local communication such as registration of the client terminal as a member of a group in the home network or provision of the contents only available for private use or a license thereof for the client terminal.

The client terminal can be registered as a member or provided with the contents or a license thereof only in the case where it is present in the same local environment as that of the home server, thereby preventing spoofing from the external network. The use of the contents is allowed between the devices only in the local environment, so that unauthorized distribution of the contents can be effectively restrained.

Thereafter, the home server directs the home router to reestablish the path so as to reactivate the path disconnected between the home network and the external network.

However, it is not necessary to disconnect the home network from the external network during the local communication. For example, the isolation of the home network from the external network for a predetermined period of time after the start of the local communication can ensure that the client terminal is present in the local environment. Therefore, the path between the home network and the external network may be reestablished, not by the home router 40 in response to a direction (command) from the home server but in an autonomic way after elapse of a predetermined period of time from the path disconnection.

For the above-described control after the successful authentication, there is a method of allowing a key to be shared throughout the authentication so as to protect the controlled communication by the key in order to prevent spoofing by the third party. For example, the above-described result of hashing is divided into a part used for authentication and a part used as a key. The key is used for hashing of a message of the controlled communication. Then, the result of hashing is transmitted with a control message, thereby allowing validity check of the message in the apparatus receiving them by the same hashing process.

In an example of an operation sequence shown in Fig. 9, the home router 40 executes the disconnection of the path between the home network and the external network in response to an explicit direction (a command addressed to itself) from the home server. However, the home router 40 maybe configured so as to autonomically disconnect the path. For example, the home router 40 constantly monitors the operation on the home network (that is, a transfer command on the network) through the LAN communication section 41, and detects the timing for performing local communication such as the registration of a client terminal by the home server as a member of a group in the home network or the provision of the contents available only for private use or a license thereof for the client terminal. At such timing, it autonomically activates a disconnecting operation of the path. In this case, it is apparent that the home router 40 may be configured to autonomically reestablish the path.

### Supplement

The present invention has been described in detail above with reference to specific embodiments. However, it is obvious that those skilled in the art can modify or substitute the embodiments without departing from the gist of the present invention. Specifically, the present invention is disclosed only by way of example, and therefore the description of the specification should not be read as limitative. In order to determine the gist of the present invention, the claims should be taken into consideration.

### Industrial Applicability

According to the present invention, preferable device-to-device authentication system, device-to-device authentication method, communication apparatus and computer program, which are capable of suitably managing the use of the contents on a home network connected to an external network via a router, can be provided.

Moreover, according to the present invention, preferable device-to-device authentication system, device-to-device authentication method, communication apparatus and computer program, which are capable of suitably managing so that each client terminal on a home network uses the contents legitimately acquired on a home server within the scope of private use allowed by the copyright law, can be provided.

According to the present invention, the use of the contents is allowed between devices only in a local environment, so that the unauthorized distribution of the contents can be effectively restrained.

## Claims

1. A device-to-device authentication system for authenticating a device on a home network connected to an external network via a router, **characterized by** comprising:
path disconnection means for connecting/disconnecting a path between said external network and said home network; and
local environment management means for making said path disconnection means operate to isolate said home network from said external network at timing ensuring communication between devices on said home network.

2. The device-to-device authentication system according to claim 1, **characterized in that**:
one of said devices is a home server for legitimately acquiring contents from said external network via said router, whereas the other of said devices is a client for making a request for said contents to said home server for use;
wherein while said home network is being isolated from said external network by said local environment management means, said home server provides said contents and/or issues a license for said contents to said client.

3. The device-to-device authentication system according to claim 1, **characterized in that**:
two or more home servers are able to be installed on said home network;
wherein said local environment means temporarily disconnects said path between said home network and said external network when providing said contents and/or issuing a license for said contents to said client for each of home server.

4. The device-to-device authentication system according to claim 3, **characterized in that**:
said client is able to receive provision of said contents and/or issuance of said license for said contents.

5. The device-to-device authentication system according to claim 3, **characterized in that**:
said client is able to use contents acquired from a plurality of home servers on said same home network, and, upon connection to a home server on an other home network, said client is not able to use contents acquired from said home servers on said home networks other than said other home network.

6. The device-to-device authentication system according to claim 1, **characterized in that**:
after completion of local communication on said home network, or after elapse of a predetermined time from a start of local communication, said local environment management means reestablishes said path between said home network and said external network.

7. A device-to-device authentication method for authenticating a device on a home network connected to an external network via a router, **characterized in that**:
a path between said external network and said home network is temporarily disconnected so as to isolate said home network from said external network at timing ensuring communication between devices on said home network.

8. The device-to-device authentication method according to claim 7, **characterized in that**:
one of said devices is a home server for legitimately acquiring contents from said external network via said router, whereas the other of said device is a client for making a request for said contents to said home server for use;
wherein while said home network is being isolated from said external network by said local environment management means, said home server provides said contents and/or issues a license for said contents to said client.

9. The device-to-device authentication system according to claim 7, **characterized in that**:
two or more home servers are able to be installed on said home network,
wherein said local environment means disconnects a path between said home network and said external network temporarily disconnected a path between said home network and said external network when providing said contents and/or issuing a license for said contents to said client for each of home server.

10. The device-to-device authentication system according to claim 9, **characterized in that**:
said client is able to receive provision of said contents and/or issuance of said license for said contents.

11. The device-to-device authentication method according to claim 9, **characterized in that**:
said client is able to use said contents acquired from a plurality of home servers on said same home network, and, upon connection to a home server on an other home network, said client is not able to use contents acquired from said home servers on said home networks other than said other home network.

12. The device-to-device authentication system according to claim 7, **characterized in that**:
after completion of local communication on said home network, or after elapse of a predetermined time from a start of local communication, said local environment management means reestablishes said path between said home network and said external network.

13. A communication apparatus operating on a home network connected to an external network via a router, **characterized by** comprising:
local environment management means for requesting disconnection to isolate said home network from said external network at timing ensuring communication between said devices on said home network.

14. The communication apparatus according to claim 13,
**characterized in that**:
said communication apparatus operates on a home network as a home server for providing contents;
wherein said local environment management means requests disconnection to isolate said home network from said external network when providing said contents and/or issuing a license for said contents to said client.

15. The communication apparatus according to claim 14, **characterized in that**:
said local environment management means requests reestablishment connection between said home network and said external network after completion of local communication with said client.

16. A communication apparatus interconnecting a home network and an external network, **characterized by** comprising:
path disconnection means for connecting/disconnecting a path between said external network and said home network; and
control means for isolating said home network from said external network by making said path disconnection means operate at timing ensuring communication between devices on said home network.

17. The communication apparatus according to claim 16, **characterized in that**:
said control means isolates said home network from said external network in response to a disconnection request from said home server providing contents on said home network.

18. The communication apparatus according to claim 16, **characterized in that**:
said control means reestablishes said connection between said home network being disconnected and said external network in response to a reestablishment request from said home server providing contents on said home network.

19. The communication apparatus according to claim 16, **characterized in that**:
said control means reestablishes said connection between said home network and said external network at predetermined timing after isolating said home network from said external network in response to a disconnecting request from said home server providing contents on said home network.

20. The communication apparatus according to claim 16, **characterized by** further comprising:
means for communicating with said external network during said home network and said external network are being disconnected; and
means for confirming disconnection of said path between said home network and said external network by accessing to a predetermined server on said external network during a period when said home network and said external network are being disconnected.

21. A computer program described in a computer-readable format so as to execute a process for authenticating a device on a home network connected to an external network via a router, **characterized by** comprising:
a step of acquiring timing for ensuring communication between devices on said home network; and
a step of temporarily disconnecting a path between said external network and said home network at said acquiring timing so as to isolate said home network from said external network.

## Amended claims

### Amended claims under Art. 19.1 PCT

**1.** (amended) A device-to-device authentication system for authenticating a device on a home network connected to an external network via a router, **characterized by** comprising:
path disconnection means for connecting/disconnecting a path between said external network and said home network; and
local environment management means for making said path disconnection means operate to isolate said home network from said external network based on a request generated by said device on said home network at timing ensuring communication between devices on said home network.

**2.** The device-to-device authentication system according to claim 1, **characterized in that**:
one of said devices is a home server for legitimately acquiring contents from said external network via said router, whereas the other of said devices is a client for making a request for said contents to said home server for use;
wherein while said home network is being isolated from said external network by said local environment management means, said home server provides said contents and/or issues a license for said contents to said client.

**3.** The device-to-device authentication system according to claim 1, **characterized in that**:
two or more home servers are able to be installed on said home network;
wherein said local environment means temporarily disconnects said path between said home network and said external network when providing said contents and/or issuing a license for said contents to said client for each of home server.

**4.** The device-to-device authentication system according to claim 3, **characterized in that**:
said client is able to receive provision of said contents and/or issuance of said license for said contents.

**5.** The device-to-device authentication system according to claim 3, **characterized in that**:
said client is able to use contents acquired from a plurality of home servers on said same home network, and, upon connection to a home server on an other home network, said client is not able to use contents acquired from said home servers on said home networks other than said other home network.

**6.** The device-to-device authentication system according to claim 1, **characterized in that**:
after completion of local communication on said home network, or after elapse of a predetermined time from a start of local communication, said local environment management means reestablishes said path between said home network and said external network.

**7.** (amended) A device-to-device authentication method for authenticating a device on a home network connected to an external network via a router, **characterized in that**:
a path between said external network and said home network is temporarily disconnected so as to isolate said home network from said external network based on a request generated by said device on said home network at timing ensuring communication between devices on said home network.

**8.** The device-to-device authentication method according to claim 7, **characterized in that**:
one of said devices is a home server for legitimately acquiring contents from said external network via said router, whereas the other of said device is a client for making a request for said contents to said home server for use;
wherein while said home network is being isolated from said external network by said local environment management means, said home server provides said contents and/or issues a license for said contents to said client.

**9.** The device-to-device authentication system according to claim 7, **characterized in that**:
two or more home servers are able to be installed on said home network,
wherein said local environment means disconnects a path between said home network and said external network temporarily disconnected a path between said home network and said external network when providing said contents and/or issuing a license for said contents to said client for each of home server.

**10.** The device-to-device authentication system according to claim 9, **characterized in that**:
said client is able to receive provision of said contents and/or issuance of said license for said contents.

**11.** The device-to-device authentication method according to claim 9, **characterized in that**:
said client is able to use said contents acquired from a plurality of home servers on said same home network, and, upon connection to a home server on an other home network, said client is not able to use contents acquired from home servers on said home networks other than said other home network.

**12.** The device-to-device authentication system according to claim 7, **characterized in that**:
after completion of local communication on said home network, or after elapse of a predetermined time from a start of local communication, said local environment management means reestablishes said path between said home network and said external network.

**13.** A communication apparatus operating on a home network connected to an external network via a router, **characterized by** comprising:
local environment management means for requesting disconnection to isolate said home network from said external network at timing ensuring communication between said devices on said home network.

**14.** The communication apparatus according to claim 13, **characterized in that**:
said communication apparatus operates on a home network
as a home server for providing contents;
wherein said local environment management means requests disconnection to isolate said home network from said
external network when providing said contents and/or issuing a license for said contents to said client.

**15.** The communication apparatus according to claim 14, **characterized in that**:
said local environment management means requests reestablishment connection between said home network and said external network after completion of local communication with said client.

**16.** (amended) A communication apparatus interconnecting a home network and an external network, **characterized by** comprising:
path disconnection means for connecting/disconnecting a path between said external network and said home network; and
control means for isolating said home network from said external network by making said path disconnection means operate by making said path disconnection means operate based on a request generated by said device on said home network at timing ensuring communication between devices on said home network.

**17.** The communication apparatus according to claim 16, **characterized in that**:
said control means isolates said home network from said
external network in response to a disconnection request from said home server providing contents on said home network.

**18.** The communication apparatus according to claim 16, **characterized in that**:
said control means reestablishes said connection between said home network being disconnected and said external network in response to a reestablishment request from said home server providing contents on said home network.

**19.** The communication apparatus according to claim 16, **characterized in that**:
said control means reestablishes said connection between said home network and said external network at predetermined timing after isolating said home network from said external network in response to a disconnecting request from said home server providing contents on said home network.

**20.** The communication apparatus according to claim 16, **characterized by** further comprising:
means for communicating with said external network during said home network and said external network are being disconnected; and
means for confirming disconnection of said path between said home network and said external network by accessing to a predetermined server on said external network during a period when said home network and said external network are being disconnected.

**21.** A computer program described in a computer-readable format so as to execute a process for authenticating a device on a home network connected to an external network via a router, **characterized by** comprising:
a step of acquiring timing for ensuring communication between devices on said home network; and
a step of temporarily disconnecting a path between said external network and said home network so as to isolate said home network from said external network based on a request generated by said device on said home network at said acquiring timing.
